# EUROPÄISCHE PATENTANMELDUNG

(11) **EP 4 406 919 A1**
(43) Veröffentlichungstag der Anmeldung: **31.07.2024**
(21) Anmeldenummer: 24153579.8
(22) Anmeldetag: 24.01.2024
(51) Int. Cl.: C02F 1/28, B01J 20/28, B01J 20/32, B01J 20/34, C02F 101/10, C02F 101/16, C02F 103/02

(54) **VERFAHREN ZUR BINDUNG VON NITRAT- UND PHOSPHATIONEN AUS DAMIT BELASTETEM WASSER**

(30) Priorität: 24.01.2023 DE 102023101694
(71) Anmelder: DTNW Deutsches Textilforschungszentrum, 47798 Krefeld (DE)
(72) Erfinder: Mayer-Gall, Thomas, 47475 Kamp-Lintfort (DE); Salma, Alaa, 47226 Duisburg (DE); Ali, Wael, 45143 Essen (DE); Opwis, Klaus, 47623 Kevelaer (DE); Gutmann, Jochen Stefan, 47803 Krefeld (DE); Wallmeier, Ruth, 41189 Mönchengladbach (DE)
(74) Vertreter: Schneiders & Behrendt Bochum

(57) **Zusammenfassung**

Die Erfindung betrifft ein Verfahren zur Bindung von Nitrat- und/oder Phosphationen aus damit belastetem Wasser, insbesondere Trinkwasser, mit den Schritten Bereitstellen eines Trägermaterials, das mit einem aminfunktionellen Polymer beladen ist, Beaufschlagen des Trägermaterials mit dem mit Nitrat- und/oder Phosphationen belasteten Wasser, Regenerieren des Trägermaterials durch Auswaschen der gebundenen Nitrat- und/oder Phosphationen mit einer wässrigen Säure, und ggf. zyklische Wiederholung der vorangehenden Schritte.

## Beschreibung

Die Erfindung betrifft ein Verfahren zur Bindung von Nitrat- und/oder Phosphationen aus damit belastetem Wasser, insbesondere Trinkwasser.

Der in der Landwirtschaft vielfach exzessiv verwandte Stickstoff- und Phosphordünger führt zur Kontamination von Oberflächen- und Grundwasser mit Nitrat- und Phosphationen. Dies führt zu Überdüngung von Gewässern und, was das Trinkwasser angeht, zu einer Belastung mit Nitrationen jenseits des von der WHO empfohlenen Richtwerts von derzeit 50 mg/l Nitrat.

Insbesondere Nitrat hat eine negative gesundheitliche Auswirkung. Bei Kleinkindern kann die Verwendung von nitratreichem Trinkwasser bei der Zubereitung von Babynahrung zur Methaemoglobinaemie führen. Generell kann Nitrat im Körper eines Menschen in toxisch wirkendes Nitrit umgewandelt werden, das zum einen im Magen-Darm-Trakt zu krebserzeugenden N-Nitrosoverbindungen umgewandelt wird und zum anderen negative Auswirkungen auf den Sauerstofftransport im Gefäßsystem hat.

Maßnahmen zur Nitratreduzierung im Trinkwasser sind bekannt und werden vielfach praktiziert, wo erforderlich. Diese Verfahren - lonenaustausch, Umkehrosmose, Adsorption, chemische Behandlung, biologische Verfahren - sind häufig apparativ aufwendig und kostenträchtig. Grundsätzlich besteht deshalb ein Bedarf an Verfahren zur Reduzierung der Nitratbelastung von Wasser, die einfach und kostengünstig durchzuführen sind. Dabei sollten die zur Reinigung des Wassers verwandten Materialien und Mittel regenerierbar bzw. wiederverwendbar sein. Entsprechendes gilt für mit Phosphationen belastetes Wasser.

Dieses Ziel wird mit dem eingangs beschriebenen Verfahren erreicht, das die folgenden Schritte aufweist:
- Bereitstellen eines Trägermaterials das mit einem aminfunktionellen Polymer beladen ist,
- Beaufschlagen des Trägermaterials mit dem mit Nitrat- und/oder Phosphationen belasteten Wasser,
- Regenerieren des Trägermaterials durch Auswaschen der gebundenen Nitrat- und/oder Phosphationen und
- Zyklische Wiederholung der vorangehenden Schritte.

Das erfindungsgemäße Verfahren macht sich die Fähigkeit von aminfunktionellen Polymeren zur Bildung von Salzen mit mineralischen und organischen Säuren zu Nutze. Erfindungsgemäß sind die aminfunktionellen Polymere an ein Trägermaterial gebunden oder stellen dieses Trägermaterial dar. Das Trägermaterial wird in Kontakt mit dem belasteten Wasser gebracht und bindet die Nitrat- und/oder Phosphationen unmittelbar. Die Bindung erfolgt insbesondere in einem Filterelement, das vom belasteten Wasser so durchströmt wird, dass es in Kontakt mit dem Trägermaterial und damit mit dem aminfunktionellen Polymer kommt.

Als Trägermaterial wird insbesondere ein textiles Trägermaterial verwandt. Vorzugsweise handelt es sich dabei um ein aus Fasern hergestelltes Flächengebilde, beispielsweise in Form eines Gewebes oder eines Nadelfilzes. Als Fasern kommen übliche natürliche oder künstliche Fasern infrage, beispielsweise Baumwolle oder Polyester. Insbesondere Nadelfilze haben sich wegen ihrer hohen Aufnahmekapazität bewährt. Im Prinzip kommen beliebige Fasern infrage. Bevorzugt als Trägermaterial ist PET in Form von handelsüblichen Fasermaterialien.

Flächengebilde als Trägermaterialien können zum einen in den Strom aus kontaminiertem Wasser gehängt werden, um die Schadstoffe zu binden, zum anderen aber auch in ein Filterelement eingebracht werden, das von dem kontaminierten Wasser durchströmt wird. Solche Filterelemente sind beispielsweise Kartuschen, die parallel und insbesondere auch in Reihe geschaltet werden können.

Die zur Bindung der Nitrat- und Phosphationen benötigten Aminogruppen können beispielsweise durch Imprägnierung des Trägermaterials mit dem aminfunktionellen Polymer bereitgestellt werden. Möglich und bevorzugt ist auch die chemische Umsetzung des Trägermaterials - beispielsweise von PET über freie Carboxylgruppen - mit dem aminfunktionellen Polymer. Aufgrund der Polarität der erfindungsgemäß verwandten aminfunktionellen Polymere ist aber häufig eine Bindung an das Trägermaterial durch Adhäsion völlig ausreichend. Polyvinylamin (PVA) haftet auf verschiedensten Trägermaterialien durch Adhäsion und wird auch durch das Waschen des Trägermaterials bei der Regeneration nicht ausgewaschen.

Als aminfunktionelle Polymere können übliche Polymere verwandt werden, die über eine große Zahl von Aminofunktionen verfügen. Zu nennen wären hier beispielsweise Poly(vinylamin) (PVA), Poly(allylamin), Poly(L-lysin) und Poly(4-aminostyrol) mit mittlerem Molekulargewicht im Bereich von beispielsweise 15.000 bis 500.000 Dalton. Besonders bevorzugt ist PVA, das mit einem mittleren Molekulargewicht von 340.000 g/Mol unter der Markenbezeichnung Lupamin im Handel ist. Weiterhin bevorzugt ist Poly(allylamin).

Die Beladung des Trägermaterials mit dem aminfunktionellen Polymer ist stark abhängig vom pH-Wert des dazu verwandten Mediums, insbesondere bei der Beladung von PET mit Poly(vinylamin) in einem wässrigen Medium. Es wurde gefunden, dass die Beladung bei einem neutralem pH-Wert am geringsten ist, bei stark saurer oder stark basischer Einstellung des Mediums am größten. Bevorzugt ist deshalb, die Beladung des Trägermaterials bei einem pH-Wert von weniger als fünf oder mehr als acht vorzunehmen. Insbesondere bei etwa pH 3 oder pH 9 bis 11.

Dazu eher gegenläufig ist die Nitrat- und Phosphatbindung des erfindungsgemäß beladenen Trägermaterials. Hier wurde gefunden, dass die Bindungsfähigkeit für Nitrationen und Phosphationen bei einem pH-Wert von 3 bis 9 am besten ist und bei stärker sauren oder basischen Bedingungen abnimmt. Das zu behandelnde belastete Wasser sollte deshalb einen in etwa neutralen pH-Wert haben.

Das mit dem aminfunktionellen Polymer beladene Trägermaterial kann in einem wässrigen Medium regeneriert werden, indem es mit einer wässrigen Mineralsäure beaufschlagt wird. Bevorzugte Mineralsäure ist Salzsäure in einer Konzentration von beispielsweise 5 bis 20 %, insbesondere etwa 10 %. Das so behandelte Trägermaterial wird im Anschluss an die Wäsche mit der Mineralsäure zweckmäßigerweise mehrfach mit Wasser gewaschen und gegebenenfalls getrocknet um danach erneut eingesetzt zu werden. Das Trägermaterial hat sich nach 20 Waschzyklen als nach wie vor bindungsfähig für Nitrat- und Phosphationen erwiesen.

Die Bindung von Nitrat- und Phosphationen ist in geringem Maße vom pH-Wert des belasteten Wassers abhängig. Es hat sich gezeigt, dass die Bindung bei einem pH-Wert zwischen 5 und 8, insbesondere 6 und 8, am besten ist, mit einer maximalen Bindekapazität bei pH 7. Es kann sich deshalb als vorteilhaft erwiesen, belastetes Wasser mit einem pH-Wert außerhalb dieses Bereiches durch Zugabe von Säure oder Lauge auf einen zuträglichen pH-Wert einzustellen. Infrage kommen insbesondere Salzsäure und Natronlauge für die Neutralisation.

Das erfindungsgemäß beladene Trägermaterial wird zur Bindung der Nitrat- und/oder Phosphationen aus belastetem Wasser zweckmäßigerweise in Filterelementen eingesetzt. Hier kommen insbesondere auch Filterkartuschen infrage, die mit dem Trägermaterial ausgestattet sind. Zur möglichst vollständigen Abscheidung der Zielionen können mehrere Filterkartuschen in Reihe geschaltet werden. Zur Regenerierung können derartige Kartuschen dann aus dem Wasserstrom aus gekoppelt und der Regenerierung mit einer wässrigen Säure unterworfen werden, anschließend mit Wasser gespült werden, um danach wieder in den Strom des belasteten Wassers eingekoppelt zu werden. Die Waschlösungen können im Kreis geführt werden und darin enthaltenes Nitrat oder Phosphat für die Düngemittelherstellung abgeschieden werden.

Die Erfindung betrifft ferner die Verwendung eines so mit aminfunktionellen Polymeren beladenen Trägermaterials für die Entfernung von Nitrat- und/oder Phosphationen aus damit belastetem Wasser, insbesondere Trinkwasser sowie mit solchen Trägermaterialien ausgestattete Filterelemente, insbesondere Filterkartuschen.

Die Erfindung wird durch die nachstehenden Beispiele näher erläutert.

### Beispiel 1

Ein PET-Gewebe mit einem Flächengewicht von 392 g/m² wurde unter Verwendung eines nicht ironischen Tensids (Marlipal O13/80) und eines Beschichtungshilfsstoffs (CoatOSil) bei einem pH-Wert von 7 mit einer PVA-Lösung in Wasser (50/50 w/w) beaufschlagt, anschließend ausgepresst und bei 80° C getrocknet, anschließend zur thermischen Fixierung für 20 Minuten auf 150° C erhitzt. Der so applizierte Gehalt an PVA betrug 11,14 %. Das Gewebe war damit für den Einsatz zur Nitratadsorption bereit.

### Beispiel 2

Das erfindungsgemäß ausgerüstete Trägermaterial von Beispiel 1 wurde verwandt, um mit 50 mg/l Natriumnitrat belastetes Wasser bei pH 7 zu behandeln. Das Trägermaterial nahm 2,02 mg Nitrat pro g Trägermaterial auf. Bei einer ausreichenden Menge an Trägermaterial konnte das Nitrat aus dem belasteten Wasser vollständig gebunden werden.

### Beispiel 3

10 I Wasser mit einem Nitratgehalt von 50 mg/l wurden erfindungsgemäß mit dem ausgerüsteten Trägermaterial von Beispiel 1 behandelt. Das so behandelte Wasser wurde in 10 einzelnen 1 I-Fraktionen aufgefangen und auf seinen Nitratgehalt hin untersucht. Es zeigte sich, dass frisches Trägermaterial geeignet war, dass Nitrat vollständig zu binden, die Bindekapazität aber mit der Durchflussmenge an belastetem Wasser abnahm. Während die Nitratgehalt in den beiden ersten 1 I-Fraktionen bei 0 lag, stieg der Nitratgehalt in den folgenden 1 I-Fraktionen über einen Nitratgehalt von 1,1; 11,8; 18,1; 28,7; 39; 43,6; 46,5 auf 47,9 mg/l an. Dies verdeutlicht die Erschöpfung der Nitrat-Bindekapazität des Trägermaterials mit zunehmender Nitratbelastung.

### Beispiel 4

Das Trägermaterial aus Beispiel 1 wurde in insgesamt 10 Zyklen zur Bindung von Nitrat aus einer wässrigen Nitratlösung mit 50 mg/l Natriumnitrat eingesetzt. Das Trägermaterial wurde zur Regeneration nach jedem Zyklus mit 100 ml 10 %iger HCl und 2 x 100 ml destilliertem Wasser gewaschen und danach erneut eingesetzt. Nach jedem Zyklus wurde die Menge an gebundenem Nitrat gemessen. Es ergab sich eine Menge von 25,01 mg nach dem ersten Zyklus, gefolgt von 29,22; 23,42; 26,22; 22,3; 23,53; 18,02, 24,8; 20,39 und 17,81 mg. Dies zeigt, dass es Trägermaterial nach Gebrauch vielfach wiederverwendbar ist.

### Beispiel 5

Beispiel 1 wurde zur Bestimmung der pH-Abhängigkeit der PVA-Beladung des Textilgewebes bei verschiedenen pH-werden wiederholt, wobei der pH-Wert der wässrigen PVA-Lösung mit HCl bzw. NaOH auf 3, 5, 7, 9 und 11 eingestellt wurde. Im Mittel wurde eine Gewichtszunahme von 14,32 % (pH 3), 12,85 %, 11,14 %, 14,03 % und 17,73 % (pH 11) bestimmt. Es zeigt sich, dass die Beladung des Textil mit PVA bei niedrigen und hohen pH-Werten am effektivsten ist.

### Beispiel 6

Gemäß Beispiel 1 und 5 mit PVA beladenes Trägermaterial wurde zur Bindung von Phosphationen aus Wasser. Dazu wurden jeweils 0,2 g des mit PVA beladenen Trägermaterials 20 h in 5 ml einer wässrigen Phosphatlösung geschüttelt. Anschließend wurde die Phosphatreduktion bestimmt. Untersucht wurde dabei der Einfluss des pH-Werts bei der Herstellung des beladenen Trägermaterials und der Einfluss des pH-Werts der Phosphatlösung. Die Phosphatreduktion in % in den jeweiligen wässrigen Lösungen ergibt sich aus der nachstehenden Tabelle, wobei die Ausgangskonzentration an Phosphat bei den pH-Werten angegeben ist.

### Beladungs-pH

| % Phosphat | 0,1480 | 0,1226 | 0,1326 | 0,1236 | 0,1284 | 0,1273 |
|---|---|---|---|---|---|---|
| pH | pH 1 | pH 3 | pH 5 | pH 7 | pH 9 | pH 11 |
| pH 3 | 21.3 | 62.9 | 55.9 | 50.6 | 25.2 | 22.6 |
| pH 5 | 13.5 | 67 | 64.7 | 57 | 46.2 | 31.3 |
| pH 7 | 13.7 | 75.9 | 71.6 | 52.8 | 43.3 | 38.4 |
| pH 9 | 14.2 | 71.9 | 67 | 52.6 | 36.2 | 26.6 |
| pH 11 | 21.9 | 73.9 | 73.6 | 58.3 | 34.3 | 31.4 |

Die Phosphatbindung ist bei einem pH-Wert der Phosphatlösung von 3 bis 7 am höchsten. Erstaunlich ist das hohe Bindungsvermögen des bei pH 7 mit PVA beladenen Trägermaterials für Phosphat. Aus Beispiel 5 ergibt sich, dass das bei pH 7 erhaltene Trägermaterial den geringsten Beladungsgrad aufweist.

## Patentansprüche

1. Verfahren zur Bindung von Nitrat- und/oder Phosphationen aus damit belastetem Wasser, insbesondere Trinkwasser, mit den Schritten
- Bereitstellen eines Trägermaterials, das mit einem aminfunktionellen Polymer beladen ist,
- Beaufschlagen des Trägermaterials mit dem mit Nitrat- und/oder Phosphationen belasteten Wasser,
- Regenerieren des Trägermaterials durch Auswaschen der gebundenen Nitrat- und/oder Phosphationen mit einer wässrigen Säure, und ggf.
- zyklische Wiederholung der vorangehenden Schritte.

2. Verfahren nach Anspruch 1, **dadurch gekennzeichnet, dass** das belastete Wasser einen pH-Wert von etwa 7 hat.

3. Verfahren nach Anspruch 2, **dadurch gekennzeichnet, dass** das Trägermaterial aus Kunstfasern, vorzugsweise PET, besteht.

4. Verfahren nach einem der Ansprüche 1 bis 3, **dadurch gekennzeichnet, dass** das Trägermaterial ein Nadelfilz ist.

5. Verfahren nach einem der vorstehenden Ansprüche, **dadurch gekennzeichnet, dass** als aminfunktionelles Polymer Poly(vinylamin), Poly(allylamin) oder Poly(4-aminostyrol) verwandt wird.

6. Verfahren nach einem der vorstehenden Ansprüche **dadurch gekennzeichnet, dass** das aminfunktionelle Polymer chemisch an das Trägermaterial gebunden ist.

7. Verfahren nach einem der vorstehenden Ansprüche, **dadurch gekennzeichnet, dass** das mit dem aminfunktionellen Polymer beladene Trägermaterial mit wässriger Salzsäure regeneriert wird.

8. Verfahren nach einem der vorstehenden Ansprüche, **dadurch gekennzeichnet, dass** das Trägermaterial als Flächengebilde ausgebildet ist.

9. Verfahren nach Anspruch 8, **dadurch gekennzeichnet, dass** das Trägermaterial in einem Filterelement angeordnet ist.

10. Verfahren nach Anspruch 9, **dadurch gekennzeichnet, dass** das Filterelement eine Filterkartusche ist.

11. Verfahren nach Anspruch 8 oder 9, **dadurch gekennzeichnet, dass** das Trägermaterial von dem zu reinigenden Wasser umspült oder durchflossen wird.

12. Verfahren nach einem der Ansprüche 8 bis 11, **dadurch gekennzeichnet, dass** mehrere mit dem Trägermaterial ausgestattete Filterelemente in Reihe geschaltet sind.

13. Verwendung eines Trägermaterials, das mit einem aminfunktionellen Polymer beladen ist, zur Bindung von Nitrat- und/oder Phosphatsionen aus Wasser, insbesondere Trinkwasser.

14. Verwendung nach Anspruch 13, **dadurch gekennzeichnet, dass** das aminfunktionelle Polymer Poly(vinylamin) ist und das Trägermaterial PET.

15. Filterelement, insbesondere Filterkartusche, mit einem Trägermaterial, das mit Poly(vinylamin) beladen ist.
